# EUROPEAN PATENT SPECIFICATION

(11) **EP 3 041 255 B1**
(45) Date of publication and mention of the grant of the patent: **19.09.2018**
(21) Application number: 14839767.2
(22) Date of filing: 08.08.2014
(51) Int. Cl.: G08C 17/02, F24F 11/00

(54) **ELECTRIC DEVICE, AIR CONDITIONER, EXTERNAL CONTROLLER, PORTABLE TERMINAL, AND AIR CONDITIONING SYSTEM**
ELEKTRISCHE VORRICHTUNG, KLIMAANLAGE, EXTERNE STEUERUNG, TRAGBARES ENDGERÄT UND KLIMAANLAGENSYSTEM
DISPOSITIF ÉLECTRIQUE, CLIMATISEUR, DISPOSITIF DE COMMANDE EXTERNE, TERMINAL PORTATIF ET SYSTÈME DE CLIMATISATION

(30) Priority: 29.08.2013 JP 2013178473
(43) Date of publication of application: 06.07.2016
(73) Proprietor: Mitsubishi Electric Corporation, Tokyo 100-8310 (JP)
(72) Inventor: NAGAMINE, Motoi, Tokyo 100-8310 (JP); HIRANO, Makoto, Tokyo 100-8310 (JP)
(74) Representative: Pfenning, Meinig & Partner mbB
(86) International application number: PCT/JP2014/071118
(87) International publication number: WO 2015/029758

(56) References cited:
- WO-A1-2009/135312
- JP-A- 2004 166 193
- JP-A- 2005 184 584
- JP-A- 2012 231 249
- US-A1- 2012 191 254

## Description

### Field

The present invention relates to an electric apparatus, an air conditioner, which is one type of the electric apparatus, an external controller for communicating with the electric apparatus, a mobile terminal for communicating with the electric apparatus or the external controller, and an air conditioning system including those apparatuses.

### Background

A conventional technique for operating an electric apparatus such as an air conditioner by using a mobile terminal is known and has been widely used. With this technique, a user downloads an application program for operating the air conditioner from an external server and installs it in the mobile terminal. The user can then operate the air conditioner. Further, for example, Patent Literature 1 discloses a technique in which the user directly downloads software for operating a target apparatus to be controlled from the target apparatus itself. US2012191254A1 discloses an network system including an air conditioner, a terminal, a power supply source, and a power management apparatus. The air conditioner includes a first communication module so as to enable communication. The terminal includes a second communication module which is communication-connected to the firs communication module, and downloads predetermined information from a web server. The power supply source supplies power to the air conditioner. The power management apparatus manages power information supplied from the power supply source. On the basis of at least one of the power information and information on an operation of the air conditioner, the terminal displays power use information of the air conditioner.
WO2009135312A1 discloses a remote control system and method for controlling and interacting with a variety of devices and systems. The system comprises at least one command server which is operable to receive control commands from a handheld communications device and to generate and transmit command signals in response to the received control commands, the transmitted command signals interacting with one or more devices controlled by the system.

### Citation List

### Patent Literature

Patent Literature 1: Japanese Patent Application Laid-Open No. 2006-340060

### Summary

### Technical Problem

However, with a system having the above-mentioned conventional structure in which an application program for operations is downloaded from an external server and installed in a mobile terminal, the application program for operations installed in the mobile terminal cannot be updated without a response from the server. Therefore, there has been a problem in that the application program for operations sometimes cannot be immediately used at the time of installing the apparatus.

Also, with the system in which the application program for operations is downloaded from the external server and installed in the mobile terminal, because the setting according to the installed apparatus cannot be performed or it is necessary to input a model number in order to perform a setting in accordance with the installed apparatus, the setting operation is complicated. Therefore, there are many cases in which functions that can be operated by the application program for operations are limited to those common to all types of apparatuses, for example, switching a power source on/off and temperature setting. Therefore, there has been a problem in that it is necessary to perform an operation by using a remote controller with which each apparatus is equipped for causing, for example, a high value-added function peculiar to the apparatus to be performed, and it is quite inconvenient.

Moreover, there has been a problem in that in the system in which the application program for operations is downloaded from an external server and installed in the mobile terminal, the load on the external server and a communication line is increased because all the application programs for operations are downloaded from the external server.

Further, with the technique disclosed in Patent Literature 1, which is a system in which software for operations of the target apparatus to be controlled is received from the target apparatus itself and installed in the mobile terminal, the entirety of the software for operations is stored in a storage region included in the controller of the target apparatus and is appropriately transmitted to the mobile terminal. Therefore, there has been a problem in that, due to the pressure on the capacity of the storage region included in the controller of the apparatus to be controlled, it is possible that the normal operation of a target apparatus that is to be controlled is hampered.

The present invention has been made in consideration of the above. An object of the present invention is to obtain an electric apparatus that can immediately use an application program for operations at the time of installing the apparatus without pressure on the capacity of a storage region included in the controller of the apparatus to be controlled while reducing the load on an external server and a communication line. Further, the electric apparatus can be caused to perform its specific function by a mobile terminal.

### Solution to Problem

In order to solve the aforementioned problems, an air conditioning system according to the independent claims is provided. More specifically, an electric apparatus that is remotely operated by an operation unit included in a mobile terminal is so constructed as to include: a wireless communication unit communicating with the mobile terminal; a controller connected to the wireless communication unit and that controls the electric apparatus; and an application data storing unit that is connected to the controller or provided in the controller and that stores specific data on the electric apparatus, wherein the operation unit includes a common operation unit having a communication driver and a screen configuration frame common to an apparatus of the same kind as the electric apparatus and a specific operation unit having information specific to the electric apparatus, the common operation unit is supplied from an external server via wireless communication, and the specific operation unit that is the specific information is supplied from the application data storing unit via the wireless communication unit.

### Advantageous Effects of Invention

According to the present invention, an effect is provided for obtaining an electric apparatus that can immediately use an application program at the time of installing the apparatus without putting pressure on the capacity of a storage region included in the controller of the apparatus to be controlled while reducing the load on an external server and on a communication line. Furthermore, the electric apparatus can be caused to perform its specific function by a mobile terminal.

### Brief Description of Drawings

FIG. 1 is a diagram illustrating an exemplary appearance configuration of an air conditioner according to a first embodiment.
FIG. 2 is a block diagram illustrating an exemplary configuration of the air conditioner according to the first embodiment.
FIG. 3 is an image diagram illustrating an exemplary configuration of an air conditioning system including the air conditioner and a database server according to the first embodiment.
FIG. 4 is a sequence diagram illustrating an exemplary operation of the air conditioning system including the air conditioner and the database server according to the first embodiment.
FIG. 5 is a diagram illustrating an exemplary image of a touch panel that is an operation screen of a mobile terminal according to the first embodiment.
FIG. 6 is a diagram illustrating an exemplary image of the touch panel that is the operation screen of the mobile terminal according to the first embodiment.
FIG. 7 is a diagram illustrating an exemplary image of the touch panel that is the operation screen of the mobile terminal according to the first embodiment.
FIG. 8 is a diagram illustrating an exemplary image of the touch panel that is the operation screen of the mobile terminal according to the first embodiment.
FIG. 9 is a block diagram illustrating an exemplary configuration of an air conditioner according to a second embodiment.
FIG. 10 is a block diagram illustrating an exemplary configuration of an air conditioner according to a third embodiment.

### Description of Embodiments

Exemplary embodiments of an electric apparatus, an air conditioner, an external controller, a mobile terminal, and an air conditioning system according to the present invention will be described in detail below with reference to the drawings. The present invention is not limited to the embodiments.

### First embodiment

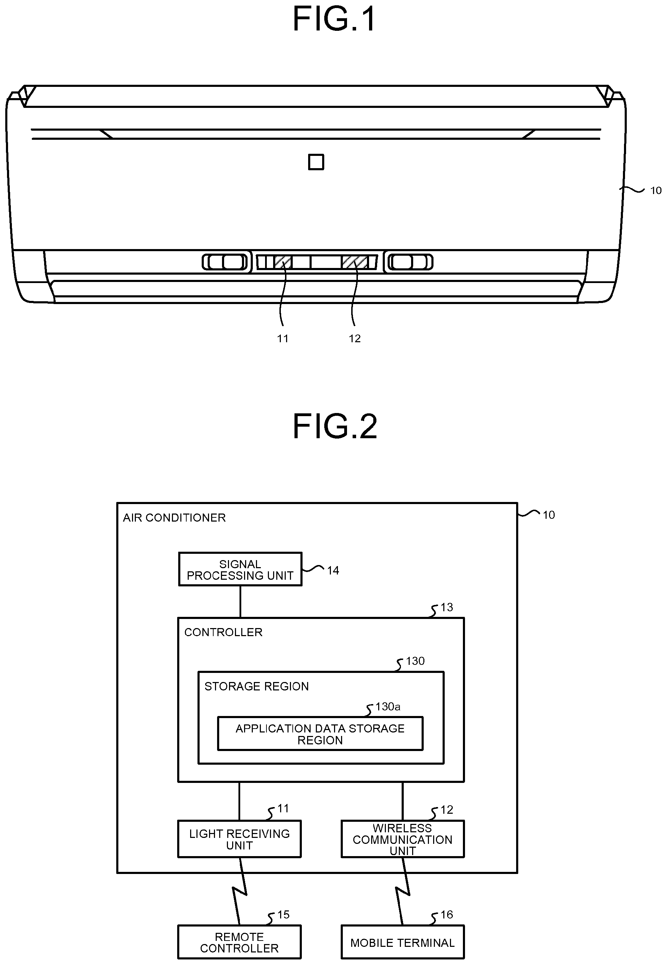

An air conditioner that is an exemplary electric apparatus according to the present invention will be described in the present embodiment. FIG. 1 is a diagram illustrating an exemplary appearance configuration of the air conditioner according to the first embodiment of the present invention. A light receiving unit 11 and a wireless communication unit 12 are provided on the front surface of an air conditioner 10, illustrated in FIG. 1.

FIG. 2 is a block diagram illustrating an exemplary configuration of the air conditioner according to the first embodiment of the present invention. The air conditioner 10 illustrated in FIG. 2 includes the light receiving unit 11, the wireless communication unit 12, a controller 13, and a signal processing unit 14.

The light receiving unit 11 receives a signal transmitted from a remote controller 15 for the air conditioner 10. The wireless communication unit 12 receives a signal transmitted from a mobile terminal 16. The controller 13 is a microcomputer including a storage region 130, and the storage region 130 includes an application data storage region 130a. The application data storage region 130a stores specific data which is application data peculiar to the air conditioner 10. The signal processing unit 14 performs processing on a signal to be transmitted and/or received.

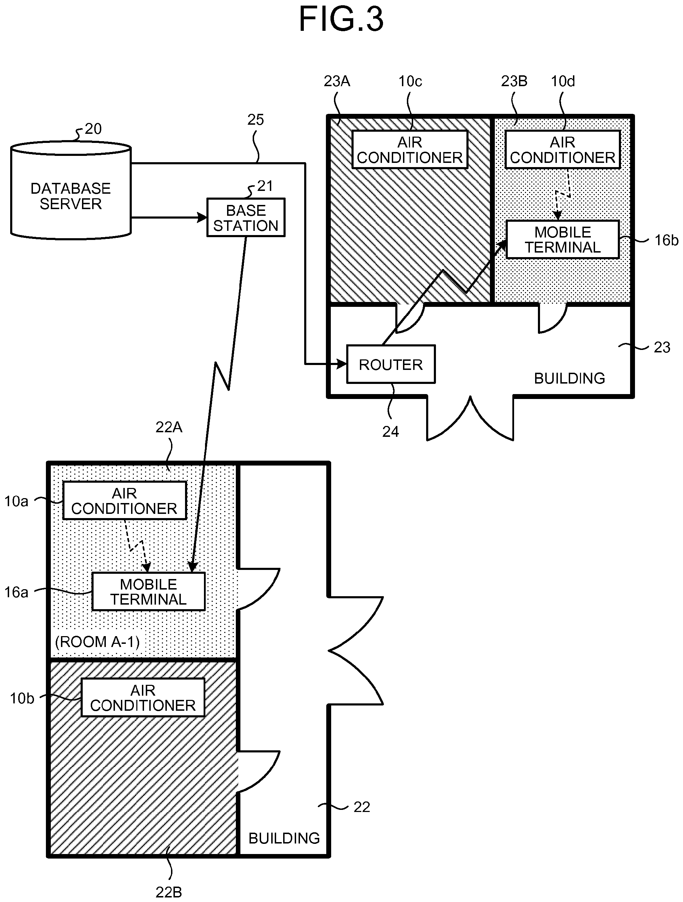

FIG. 3 is an image diagram illustrating an exemplary configuration of an air conditioning system including the air conditioner and a database server according to the first embodiment of the present invention. In FIG. 3, an air conditioner 10a is installed in a room 22A of a building 22, and an air conditioner 10b is installed in a room 22B. An air conditioner 10c is installed in a room 23A of a building 23, and an air conditioner 10d is installed in a room 23B. Further, a router 24 is located in the building 23.

Each application data storage region 130a of the air conditioners 10a to 10d stores specific data, which is application data including an operation and setting information specific to each air conditioner. An external database server 20 stores common data, which is firmware common to the air conditioners 10a to 10d. In FIG. 3, a route for the common data is indicated by a solid arrow, and a route for the specific data is indicated by a dotted arrow.

The firmware is a common part that converts analog information into binary digital information and stores it in a data field that is a frame, for example, as a communication driver. The application is information assigned to indicate what the binary digital information is. For example, four bits in a first field indicate the setting temperature, and the fourth bit in a second field indicates that a function is in a state of enabled or disabled.

Further, the firmware has a function of detecting the electric apparatus to be controlled (hereinafter it may be referred to just as "control-target apparatus" or the like) from a region around the mobile terminal. When the control-target electric apparatus has been detected, the specific data, which is the application data including the operation and setting information specific to the electric apparatus, can be downloaded and installed in the mobile terminal. In this way, the mobile terminal then operates the control-target electric apparatus via an operation unit, which is software having the firmware that is a common operation unit, and an application that is a specific operation unit.

The database server 20 stores the common data, for example, a screen configuration frame, which is a frame of an operation screen and a processing system common to the air conditioners 10a to 10d. Each of the air conditioners 10a to 10d stores specific data, which is determined according to the type of each of the air conditioners 10a to 10d.

Mobile terminals 16a and 16b combine the common data distributed from the database server 20 with the specific data distributed from the air conditioners 10a to 10d, and then cause single software for operating the air conditioner to operate the air conditioner.

Also, in FIG. 3, the mobile terminal 16a is present in the room 22A, and the mobile terminal 16b is present in the room 23B.

The mobile terminal 16a can download the common data from the database server 20 via a base station 21 by using wireless communication. That is, the mobile terminal 16a can download the common data via a circuit line of a communication carrier.

The mobile terminal 16b can download the common data from the database server 20 via a communication line 25 and the router 24. That is, the mobile terminal 16b can download the common data by using a wired or wireless communication line between the database server 20 and the router 24, and the wireless communication line between the router 24 and the mobile terminal 16b.

Here, it is preferable that the wireless communication between the router 24 and the mobile terminal 16b be performed, for example, by using a wireless LAN. For example, Wi-Fi (registered trademark) can be given as an example of a wireless LAN. However, the configuration is not limited to this. The mobile terminal 16b may download the common data via the base station 21by using wireless communication, similarly to the mobile terminal 16a.

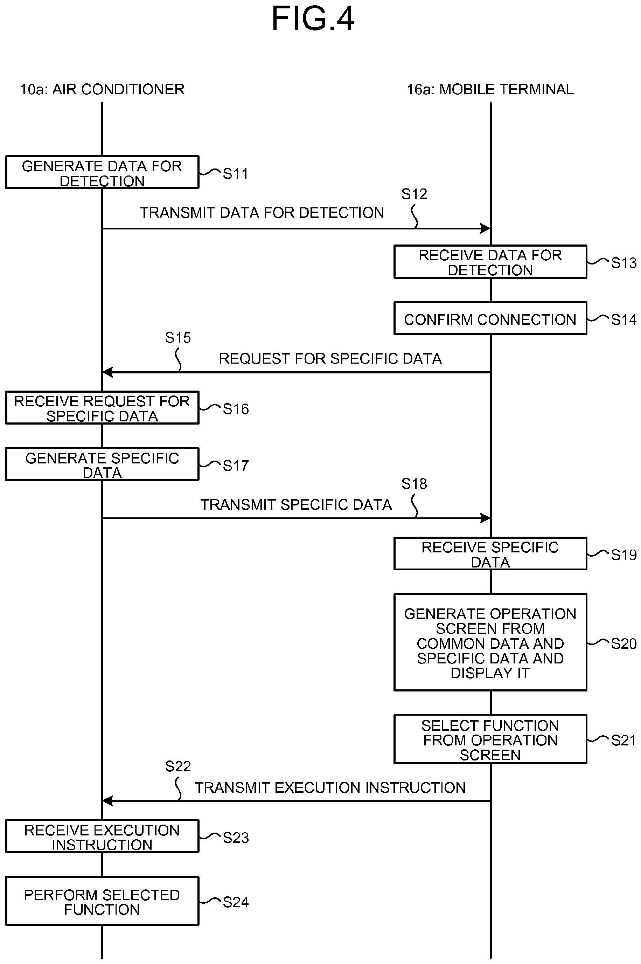

Next, an operation of the system illustrated in FIG. 3 will be described with reference to FIG. 4. It is assumed that firmware that is the common data is installed in advance in the mobile terminal.

Let us consider a case in which the mobile terminal 16a in which the firmware is pre-installed has entered the room 22A where the air conditioner 10a is present or a case in which the air conditioner 10a is installed in the room 22A where the mobile terminal 16a in which the firmware has been installed is present.

First, the air conditioner 10a generates data for detection to detect the mobile terminal 16a, which is located in an area (step S11) and transmits it (step S12). The generation of the data for detection starts when the power of the air conditioner 10a is turned on, and the air conditioner 10a continues to transmit the data for detection until specific data is required by the mobile terminal in the area. When receiving the data for detection (step S13), the mobile terminal 16a generates and displays a connection confirming message. The mobile terminal 16a requests the user to choose whether to connect to the air conditioner 10a. When the user chooses to connect the mobile terminal 16a to the air conditioner 10a (step S14), the mobile terminal 16a requests the specific data from the air conditioner 10a (step S15).

When receiving the request for the specific data (step S16), the air conditioner 10a generates the specific data or performs processing on the specific data to be transmitted (step S17) and transmits the specific data (step S18). When receiving the specific data (step S19), the mobile terminal 16a generates the operation screen from the common data and the specific data and displays it (step S20). When the user selects a function from the operation screen (step S21), the mobile terminal 16a transmits an execution instruction to the air conditioner 10a (step S22).

When receiving the execution instruction (step S23), the air conditioner 10a executes the selected function according to the execution instruction (step S24). The mobile terminal 16a can operate the air conditioner 10a in this way.

Applications for a plurality of air conditioners can be installed in the common data, which is the firmware installed in the mobile terminal 16a. Therefore, the user can monitor and operate the setting information and environmental information by selecting the air conditioner to be monitored and operated by the mobile terminal 16a. Further, while in the room 22B, the user can monitor and operate the setting information and the environmental information of the air conditioner 10a. At this time, the mobile terminal 16a identifies the air conditioner to be monitored and operated by using an identification number and a symbol including a year, a type, and a model number, which are identifiers of the air conditioner. By identifying the air conditioner in this way, even when there are a plurality of operable air conditioners, the air conditioners can be individually monitored and operated. Also, the environment around the air conditioner that is present at the closest position to the user may be monitored and operated with higher priority according to the radio field intensity between the air conditioner and the mobile terminal.

As described above, according to the present embodiment, the software for operating the air conditioner is divided into common data for forming the common operation unit and specific data for forming the specific operation unit and these are supplied to the mobile terminal. Therefore, while the load on the database server and on the communication line is reduced, pressure on the capacity of the storage region included in the air conditioner can also be reduced.

Further, by storing the specific data in the air conditioner, an operation performed by using a specific function included in the operable air conditioner, as well as operation performed by using common functions, can be performed immediately after installing the air conditioner.

Moreover, according to the configuration of the present embodiment, when the firmware, which is the common data, is installed in the mobile terminal, an operable air conditioner can be detected. Therefore, it is not necessary to search for a remote controller for the air conditioner, and convenience can be improved.

Also, the common data, which is the firmware, includes the function to detect a control-target air conditioner near the mobile terminal. Accordingly, when the control-target air conditioner is detected, the specific data which is the application data of the operation and the setting information specific for the air conditioner, can be downloaded and installed in the mobile terminal. Further, the operation and information screen can be provided in accordance with the room where the user who owns the mobile terminal is present.

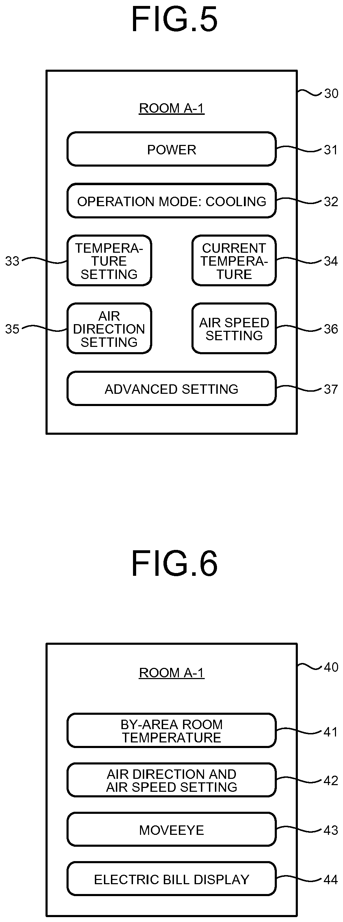

Next, the operation screen of the mobile terminal according to the present embodiment will be described. Each of FIGS. 5, 6, 7, and 8 is a diagram illustrating an exemplary image of a touch pane, which is the operation screen of the mobile terminal according to the first embodiment of the present invention. FIGS. 5, 6, 7, and 8 illustrate the operation screen of the air conditioner 10a in FIG. 3, and here, the room 22A is displayed as a "room A-1".

A normal screen 30 illustrated in FIG. 5 has a power button 31, an operation mode switching button 32, a temperature setting button 33, a current temperature displaying button 34, an air direction setting button 35, an air speed setting button 36, and an advanced setting button 37.

The power button 31 is a button for switching the air conditioner ON and Off. The operation mode switching button 32 is a button for switching the operation mode of the air conditioner. The temperature setting button 33 is a button for indicating a setting temperature of the air conditioner and operating it. The current temperature indicating button 34 is a button for displaying the current temperature around the air conditioner. The air direction setting button 35 is a button for displaying air direction setting of the air conditioner and operating it. The air speed setting button 36 is a button for displaying the setting and operating the air speed fed from the air conditioner. On the normal screen 30, only basic settings can be monitored and operated.

Here, the advanced setting button 37 is a button for monitoring and operating the setting of the air conditioner with more detail. For example, when the advanced setting button 37 is tapped, the screen display is switched, and an advanced setting screen 40 illustrated in FIG. 6 is displayed. For example, the MOVEEYE (registered trademark) can be set by using the advanced setting screen 40.

The advanced setting screen 40 illustrated in FIG. 6 has a by-area room temperature displaying button 41, an air direction and air speed setting button 42, a MOVEEYE (registered trademark) setting button 43, and an electric fee displaying button 44.

The by-area room temperature displaying button 41 is a button for dividing an air conditioning target area into detailed areas and displaying the temperature in each area. The air direction and air speed setting button 42 is a button for setting the air direction and the air speed of the air conditioner in detail. The MOVEEYE (registered trademark) setting button 43 is a button for switching a "MOVEEYE (registered trademark)" function ON/OFF. The "MOVEEYE (registered trademark)" function is one of the functions that may be mounted in the air conditioner of the applicant of the present invention. The MOVEEYE function is a function for understanding the environment, such as temperature distribution, in the air conditioning target area by using a movable sensor mounted in the main body of the air conditioner and controlling the air conditioning setting, such as the air direction, so as to realize more comfortable air conditioning on the basis of the acquired information. The electric fee displaying button 44 is a button for calculating the electric fee from the power consumption during a certain period and displaying it.

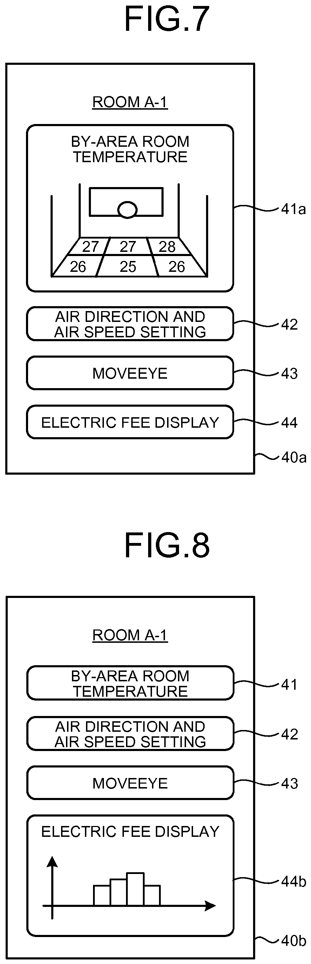

On the advanced setting screen 40 illustrated in FIG. 6, when the by-area room temperature displaying button 41 is tapped, an advanced setting screen 40a, illustrated in FIG. 7 is displayed. In the advanced setting screen 40a illustrated in FIG. 7, the temperature of each area is displayed in detail in a by-area room temperature displaying region 41a.

In the by-area room temperature displaying region 41a, if a part that is cooled or heated too much or is not cooled or heated enough exists and thus unevenness of the temperature occurs, the power consumption can be reduced by increasing the setting temperature or switching the air direction to eliminate the unevenness of the temperature or prompting the use of an electric fan. Further, a detailed operation can be performed by detecting a part where the user is present and locally cooling or heating the part where the user is present or blowing the air toward the part. Detailed control can then be realized according to a request of the user.

For example, when the electric fee displaying button 44 in the advanced setting screen 40 in FIG. 6 is tapped, an advanced setting screen 40b, illustrated in FIG. 8, is displayed. In the advanced setting screen 40b illustrated in FIG. 8, an electric fee calculated from the power consumption during a certain period is displayed in an electric fee displaying region 44b. The period may be set and changed by the user.

As described heretofore, according to the present embodiment, the advanced setting screen determined by the air conditioner, which is an electric apparatus including an electronic apparatus, can be displayed. The firmware includes the normal screen illustrated in FIG. 5 and the screen frames illustrated in FIGS. 6 to 8. It is preferable to clearly indicate that a function that is not included in the air conditioner to be monitored and operated cannot be operated by downloading and installing an application program, for example, by displaying the function in a grayed out state. For example, when the air conditioner 10a includes the "electric fee display" function and the air conditioner 10b does not include the "electric fee display" function, it is preferable that the "electric fee display" button be displayed in a grayed out state at the time of operating the air conditioner 10b. Here, the "electric apparatus" indicates an apparatus that operates by being controlled by the "electronic apparatus" as the air conditioner according to the present invention.

As described above, according to the present embodiment, the application program can be immediately used at the time of installing the apparatus without pressure on the capacity of the storage region included in the controller of the control-target apparatus while reducing the loads on the external server and the communication line. The function specific for each apparatus can be performed by the mobile terminal to be operated.

### Second embodiment

In the first embodiment above, the configuration in which the storage region 130 included in the controller 13 has the application data storage region 130a has been described. However, in the present embodiment, a configuration in which application data is stored outside the controller 13 will be described.

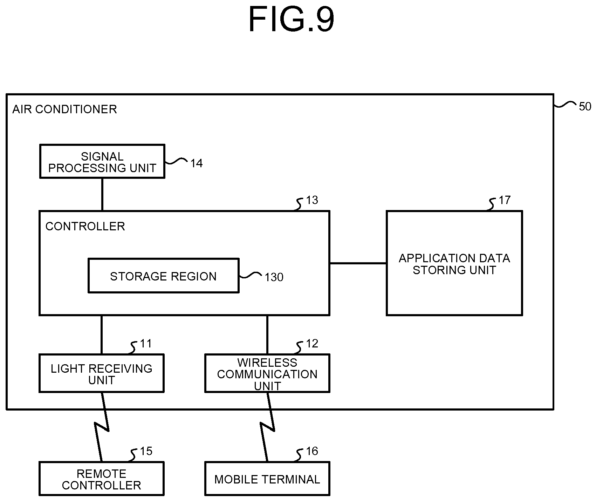

FIG. 9 is a block diagram illustrating an exemplary configuration of an air conditioner according to a second embodiment of the present invention. An air conditioner 50 illustrated in FIG. 9 has an application data storing unit 17, which is an external storage region, outside the controller 13. This point is different from the air conditioner 10 illustrated in FIG. 1, and other components are similar to those of the air conditioner 10 illustrated in FIG. 1.

The capacity of a microcomputer included in the controller 13 can thus be reduced by having the application data storing unit 17, which is an external storage region, outside the controller 13.

The application data storing unit 17 may be made removable by using external storage media as the application data storing unit 17.

Further, when a rewritable EEPROM or SD card (registered trademark) is used for the application data storing unit 17, software that has been fine tuned for each user can also be installed, and updating after installation of the air conditioner is easily performed.

As described above, in the present embodiment, the specific data of the apparatus is stored in the external storage region, but not in the microcomputer that is the controller. Therefore, pressure on the capacity of storage in the microcomputer that is the controller can be reduced.

### Third embodiment

In the present embodiment, a case will be described in which an adapter that is an external controller with which the present invention can be applied to a conventional air conditioner is employed.

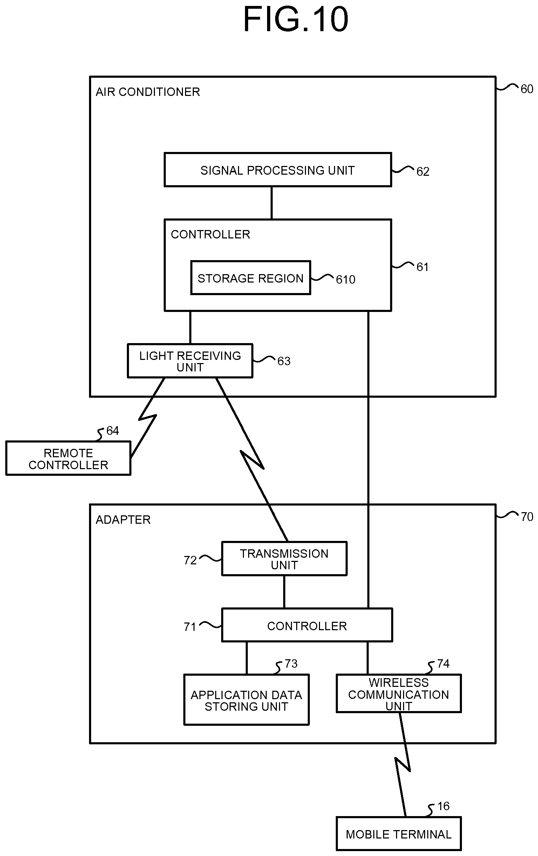

FIG. 10 is a block diagram illustrating an exemplary configuration of an air conditioner and an external controller adapter according to a third embodiment of the present invention. An air conditioner 60 illustrated in FIG. 10 communicates with an adapter 70 illustrated in FIG. 10. The air conditioner 60 illustrated in FIG. 10 is a conventional air conditioner having a controller 61 including a storage region 610 therein, a signal processing unit 62, and a light receiving unit 63. The light receiving unit 63 receives data from a remote controller 64.

The adapter 70 illustrated in FIG. 10 includes a controller 71, a transmission unit 72, an application data storing unit 73, and a wireless communication unit 74. The controller 71 controls the adapter 70. The transmission unit 72 transmits data to the light receiving unit 63 of the air conditioner 60. The controller 71 may be wire-connected to and directly communicate with the controller 61 of the air conditioner 60 without the provision of the transmission unit 72. The application data storing unit 73 stores specific data similarly to the application data storage region 130a in FIG. 2 and the application data storing unit 17 in FIG. 9. The wireless communication unit 74 performs transmission and reception to and from the mobile terminal 16 similarly to the wireless communication unit 12 in FIG. 2.

As described above, in the present embodiment, the configuration of the present invention can be realized by the adapter. Therefore, the effect of the present invention can be given to a conventional air conditioner.

Although it has not been specifically noted, specific data can be updated after the installation thereof by applying a configuration that can communicate with the external database server to the air conditioner described in the first to third embodiments.

An air conditioner, which is an exemplary electric apparatus according to the present invention, has been described in the first to third embodiment above. However, the present invention can be applied, not only to air conditioners, but to any conventional electric apparatus operated by a remote controller.

The operation unit in the first to third embodiments is software for operations that does not occupy a part of the air conditioner and operates the air conditioner.

### Industrial Applicability

As described above, the electronic apparatus according to the present invention is useful for the apparatus including a specific function and is especially suitable for a multifunctional air conditioner.

### Reference Signs List

10, 10a to 10d, 50, 60 air conditioner, 11, 63 light receiving unit, 12, 74 wireless communication unit, 13, 61, 71 controller, 14, 62 signal processing unit, 15, 64 remote controller, 16, 16a, 16b mobile terminal, 17, 73 application data storing unit, 20 database server, 21 base station, 22, 23 building, 22A, 22B, 23A, 23B room, 24 router, 25 communication line, 30 normal screen, 31 power button, 32 operation mode switching button, 33 temperature setting button, 34 current temperature displaying button, 35 air direction setting button, 36 air speed setting button, 37 advanced setting button, 40, 40a, 40b advanced setting screen, 41 by-area room temperature displaying button, 41a by-area room temperature displaying region, 42 air direction and air speed setting button, 43 MOVEEYE (registered trademark) setting button, 44 electric fee displaying button, 44b electric fee displaying region, 70 adapter, 72 transmission unit, 130 storage region, 130a application data storage region, 610 storage region, S11 to S24 step

## Claims

1. An air conditioning system comprising an air conditioner (10), a mobile terminal (16) and an external server (20), wherein the air conditioner is remotely operated by an operation unit included in the mobile terminal (16), the air conditioner comprising:
a wireless communication unit (12) communicating with the mobile terminal (16);
a controller (13) connected to the wireless communication unit and is configured to control the air conditioner; and
an application data storing unit (130a, 17) that is connected to the controller or provided in the controller and is configured to store a specific operation unit of the operation unit, wherein
the operation unit includes a common operation unit having a communication driver and a screen configuration frame common to an apparatus of the same kind as the air conditioner, and
the specific operation unit having information specific to the air conditioner, whereby
the common operation unit is configured to be supplied from the external server (20) via wireless communication to the mobile terminal, and
the specific operation unit is configured to be supplied from the application data storing unit of the air conditioner via the wireless communication unit (12) to the mobile terminal, **characterized in that**
the mobile terminal (16) is configured to divide an air conditioning target area into detailed areas and to display the temperature in each area, based on temperature distribution data of the air conditioning target area from the air conditioner.

2. An air conditioning system comprising an air conditioner (60), an external controller (70), a mobile terminal (16) and an external server (20), wherein the external controller (70) is configured to remotely operate the air conditioner (60) by means of an operation unit included in the mobile terminal (16), the external controller comprising:
a wireless communication unit (74) communicating with the mobile terminal;
a controller connected (71) to the wireless communication unit and is configured to control the air conditioner (60); and
an application data storing unit (73) connected to the controller and is configured to store
a specific operation unit of the operation unit, wherein
the operation unit includes a common operation unit having a communication driver and a screen configuration frame common to an apparatus of the same kind as the air conditioner, and the specific operation unit having information and a processing system specific to the air conditioner, whereby
the common operation unit is configured to be supplied from the external server via wireless communication to the mobile terminal, and
the specific operation unit is configured to be supplied from the application data storing unit (73) of the external controller via the wireless communication unit (74) to the mobile terminal; **characterized in that**
the mobile terminal (16) is configured to divide an air conditioning target area into detailed areas and to display the temperature in each area, based on temperature distribution data of the air conditioning target area from the air conditioner.

3. The air conditioning system according to claim 2, wherein
the external controller performs wired communication with the air conditioner.

4. The air conditioning system according to claim 2, wherein
the external controller communicates with the air conditioner via a remote controller light receiving unit (63).

5. The air conditioning system according to any of claims 1 to 4, wherein
the mobile terminal is capable of identifying each one of a plurality of existing air conditioners and individually monitoring and operating the air conditioner.

6. The air conditioning system according to claim 5, wherein
the mobile terminal is capable of identifying an air conditioner existing closest to the mobile terminal from among the plurality of the existing air conditioners and operating the closest air conditioner with higher priority.

7. The air conditioning system according to claim 5, wherein
the mobile terminal is capable of identifying an air conditioner existing closest to the mobile terminal from among the plurality of the existing air conditioners and monitoring environment around the closest air conditioner with higher priority.

## Patentansprüche

1. Klimatisierungssystem, umfassend eine Klimaanlage (10), ein mobiles Endgerät (16) und einen externen Server (20), wobei die Klimaanlage durch eine im mobilen Endgerät (15) aufgenommene Betriebseinheit ferngesteuert ist, wobei die Klimaanlage umfasst:
eine drahtlose Kommunikationseinheit (12), kommunizierend mit dem mobilen Endgerät (16);
eine Steuereinheit (13), die mit der drahtlosen Kommunikationseinheit verbunden ist und eingerichtet ist, um die Klimaanlage zu steuern; und
eine Anwendungsdatenspeichereinheit (130a, 17), die mit der Steuereinheit verbunden ist oder in der Steuereinheit bereitgestellt ist und eingerichtet ist, um eine spezifische Betriebseinheit der Betriebseinheit zu speichern, wobei
die Betriebseinheit aufweist eine gemeinsame Betriebseinheit, aufweisend einen Kommunikationstreiber und einen Bildschirmkonfigurationsrahmen, gemein einer Vorrichtung vom gleichen Typ wie die Klimaanlage, und
die spezifische Betriebseinheit, aufweisend für die Klimaanlage spezifische Informationen, wobei
die gemeinsame Betriebseinheit eingerichtet ist, um vom externen Server (20) über drahtlose Kommunikation an das mobile Endgerät bereitgestellt zu werden, und
die spezifische Betriebseinheit eingerichtet ist, um von der Anwendungsdatenspeichereinheit der Klimaanlage über die drahtlose Kommunikationseinheit (12) an das mobile Endgerät bereitgestellt zu werden, **dadurch gekennzeichnet, dass**
das mobile Endgerät (16) eingerichtet ist, um einen Klimatisierungszielbereich in detaillierte Bereiche aufzuteilen und die Temperatur in jedem Bereich anzuzeigen, auf der Grundlage von Temperaturverteilungsdaten des Klimatisierungszielbereichs von der Klimaanlage.

2. Klimatisierungssystem, umfassend eine Klimaanlage (60) und eine externe Steuereinheit (70), ein mobiles Endgerät (16) und einen externen Server (20), wobei die externe Steuereinheit (70) eingerichtet ist, um die Klimaanlage (6) mittels einer im mobilen Endgerät (16) aufgenommenen Betriebseinheit fernzusteuern, wobei die externe Steuereinheit umfasst:
eine drahtlose Kommunikationseinheit (74), kommunizierend mit dem mobilen Endgerät;
eine Steuereinheit (71), die mit der drahtlosen Kommunikationseinheit verbunden ist und eingerichtet ist, um die Klimaanlage (60) zu steuern; und
eine Anwendungsdatenspeichereinheit (73), die mit der Steuereinheit verbunden ist und eingerichtet ist, um eine spezifische Betriebseinheit der Betriebseinheit zu speichern, wobei
die Betriebseinheit aufweist eine gemeinsame Betriebseinheit, aufweisend einen Kommunikationstreiber und einen Bildschirmkonfigurationsrahmen, gemein einer Vorrichtung vom gleichen Typ wie die Klimaanlage, und
die spezifische Betriebseinheit, aufweisend Informationen und ein Verarbeitungssystem spezifisch für die Klimaanlage, wobei
die gemeinsame Betriebseinheit eingerichtet ist, um vom externen Server über drahtlose Kommunikation an das mobile Endgerät bereitgestellt zu werden, und
die spezifische Betriebseinheit eingerichtet ist, um von der Anwendungsdatenspeichereinheit (73) der externen Steuereinheit über die drahtlose Kommunikationseinheit (74) an das mobile Endgerät bereitgestellt zu werden; **dadurch gekennzeichnet, dass**
das mobile Endgerät (16) eingerichtet ist, um einen Klimatisierungszielbereich in detaillierte Bereiche aufzuteilen und die Temperatur in jedem Bereich anzuzeigen, auf der Grundlage von Temperaturverteilungsdaten des Klimatisierungszielbereichs aus der Klimaanlage.

3. Klimatisierungssystem nach Anspruch 2, wobei
die externe Steuereinheit drahtgebundene Kommunikation mit der Klimaanlage durchführt.

4. Klimatisierungssystem nach Anspruch 2, wobei
die externe Steuereinheit mit der Klimaanlage über eine Fernsteuerungslichtempfangseinheit (63) kommuniziert.

5. Klimatisierungssystem nach einem der Ansprüche 1 bis 4, wobei
das mobile Endgerät in der Lage ist, jede von einer Vielzahl von vorhandenen Klimaanlagen zu identifizieren und die Klimaanlage einzeln zu überwachen und zu betreiben.

6. Klimatisierungssystem nach Anspruch 5, wobei
das mobile Endgerät in der Lage ist, eine Klimaanlage, die zum mobilen Endgerät am nahesten vorhanden ist, aus der Vielzahl von vorhandenen Klimaanlagen zu identifizieren und die naheste Klimaanlage mit höherer Priorität zu betreiben.

7. Klimatisierungssystem nach Anspruch 5, wobei
das mobile Endgerät in der Lage ist, eine Klimaanlage, die zum mobilen Endgerät am nahesten ist, aus der Vielzahl von vorhandenen Klimaanlagen zu identifizieren und Umgebung um die naheste Klimaanlage mit höherer Priorität zu überwachen.

## Revendications

1. Système de climatisation comprenant un climatiseur (10), un terminal mobile (16) et un serveur externe (20), dans lequel le climatiseur est mis en oeuvre à distance par une unité d'opération incluse dans le terminal mobile (16), le climatiseur comprenant :
une unité de communication sans fil (12) communiquant avec le terminal mobile (16) ;
un contrôleur (13) connecté à l'unité de communication sans fil et configuré pour commander le climatiseur ; et
une unité de mémorisation de données d'application (130a, 17) qui est connectée au contrôleur ou prévue dans le contrôleur et qui est configurée pour mémoriser une unité d'opération spécifique de l'unité d'opération, dans lequel
l'unité d'opération comprend une unité d'opération commune ayant un pilote de communication et une trame de configuration d'écran commune à un appareil du même type que le climatiseur, et
l'unité d'opération spécifique ayant des informations spécifiques au climatiseur, moyennant quoi
l'unité d'opération commune est configurée pour être fournie du serveur externe (20), par l'intermédiaire d'une communication sans fil, au terminal mobile, et
l'unité d'opération spécifique est configurée pour être fournie de l'unité de mémorisation de données d'application du climatiseur, par l'intermédiaire de l'unité de communication sans fil (12), au terminal mobile, **caractérisé en ce que**
le terminal mobile (16) est configuré pour diviser une zone cible de climatisation en des zones détaillées et pour afficher la température dans chaque zone, sur la base des données de répartition de température de la zone cible de climatisation provenant du climatiseur.

2. Système de climatisation comprenant un climatiseur (60), un contrôleur externe (70), un terminal mobile (16) et un serveur externe (20), dans lequel le contrôleur externe (70) est configuré pour mettre en oeuvre à distance le climatiseur (60) au moyen d'une unité d'opération incluse dans le terminal mobile (16), le contrôleur externe comprenant :
une unité de communication sans fil (74) communiquant avec le terminal mobile ;
un contrôleur (71) connecté à l'unité de communication sans fil et configuré pour commander le climatiseur (60) ; et
une unité de mémorisation de données d'application (73) connectée au contrôleur et configurée pour mémoriser une unité d'opération spécifique de l'unité d'opération, dans lequel
l'unité d'opération comprend une unité d'opération commune ayant un pilote de communication et une trame de configuration d'écran commune à un appareil du même type que le climatiseur, et
l'unité d'opération spécifique ayant des informations et un système de traitement spécifiques au climatiseur, moyennant quoi
l'unité d'opération commune est configurée pour être fournie du serveur externe, par l'intermédiaire d'une communication sans fil, au terminal mobile, et
l'unité d'opération spécifique est configurée pour être fournie de l'unité de mémorisation de données d'application (73) du contrôleur externe, par l'intermédiaire de l'unité de communication sans fil (74), au terminal mobile, **caractérisé en ce que**
le terminal mobile (16) est configuré pour diviser une zone cible de climatisation en des zones détaillées et pour afficher la température dans chaque zone, sur la base des données de répartition de température de la zone cible de climatisation provenant du climatiseur.

3. Système de climatisation selon la revendication 2, dans lequel
le contrôleur externe effectue une communication câblée avec le climatiseur.

4. Système de climatisation selon la revendication 2, dans lequel
le contrôleur externe communique avec le climatiseur par l'intermédiaire d'une unité de réception de lumière de télécommande (63).

5. Système de climatisation selon l'une quelconque des revendications 1 à 4, dans lequel
le terminal mobile est capable d'identifier chacun d'une pluralité de climatiseurs existants et de surveiller et de mettre en oeuvre individuellement le climatiseur.

6. Système de climatisation selon la revendication 5, dans lequel
le terminal mobile est capable d'identifier un climatiseur existant le plus proche du terminal mobile parmi la pluralité des climatiseurs existants et de mettre en oeuvre le climatiseur le plus proche avec une priorité plus élevée.

7. Système de climatisation selon la revendication 5, dans lequel
le terminal mobile est capable d'identifier un climatiseur existant le plus proche du terminal mobile parmi la pluralité des climatiseurs existants et de surveiller l'environnement autour du climatiseur le plus proche avec une priorité plus élevée.
